# EUROPEAN PATENT APPLICATION

(11) **EP 1 148 102 A2**
(43) Date of publication of application: **24.10.2001**
(21) Application number: 01203047.4
(22) Date of filing: 10.08.2001
(51) Int. Cl.: C09D 7/12

(54) **Coating composition and coated substrate with good heat stability and colour**

(30) Priority: 21.12.2000 EP 00204724
(71) Applicant: DSM N.V., 6411 TE Heerlen (NL)
(72) Inventor: Jahromi, Shahab, 6216 TE Maastrich (NL)
(74) Representative: van Tol-Koutstaal, Charlotte Adeliene

(57) **Abstract**

Coating composition comprising one or more resins and an effective amount of one or more degassing compounds according to structure I, II, III, IV and/or V: 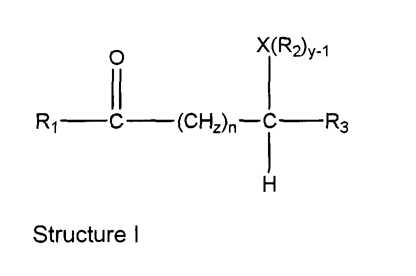 wherein:
R₁, R₂ and R₃ may be hydrogen, a (un)substituted alkyl or aryl group with 1-20 carbon atoms and optionally one or more hetero atoms, X is a hetero atom chosen from B, N, O, Si, P, S or Se, with the proviso that when X = O, R₂ is not hydrogen;
or 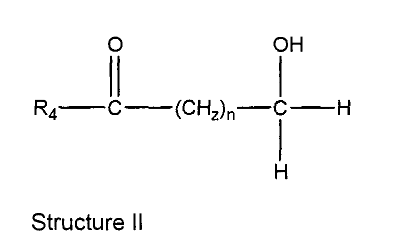 wherein:
R₄ may be hydrogen, a (un)substituted alkyl or aryl group with 1-20 carbon atoms and optionally one or more hetero atoms;
or 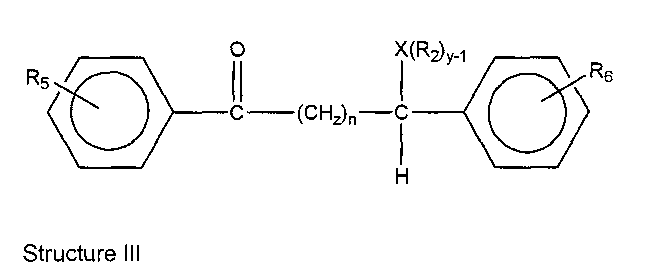 wherein:
R₂ may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms,
R₅ and R₆ may be hydrogen, a (un)substituted alkyl or aryl group with 1-20 carbon atoms, with the proviso that when n=0, X=O and R₂ is hydrogen, R₅ and R₆ are not at the same time hydrogen,
X is a hetero atom chosen from B, N, O, Si, P, S or Se;
or 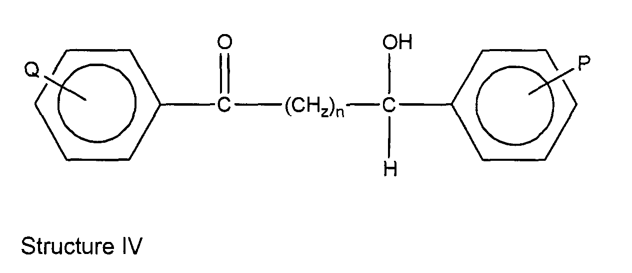 wherein:
P and Q are are hydrogen or ortho-, para-directing substituent groups, with the proviso that when n=0, P and Q are not hydrogen at the same time;
or 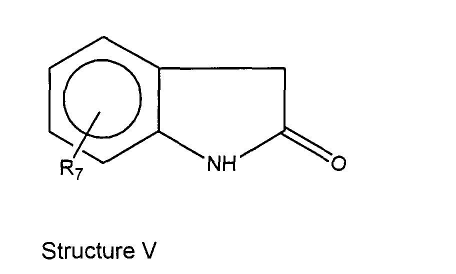 wherein:
R₇ is hydrogen, a substituted or unsubstituted alkyl or aryl group with 1-20 carbon atoms and optionally one or more hetero atoms.

## Description

The invention relates to a coating composition comprising one or more resins and an effective amount of one or more degassing compounds.

A coating composition is applied onto a substrate. During the application of the coating composition or shortly thereafter, the possibility exists that gas is incorporated in the layer comprising the coating composition. The incorporated gas, mostly air, will escape during further processing. When all the incorporated gas would escape there would be almost no problem. However some gas will be trapped within the coating layer that develops by the hardening or crosslinking of the resin. The presence of these trapped gas bubbles gives not only an undesirable appearance to the final coating, it also negatively influences the adhesion between the coating and the substrate. Further the presence of these entrapped gas bubbles leads to a lower level of protection against, for example, corrosion. Because of these negative effects, it is necessary to reduce the amount of entrapped gas. This can be reached by the use of suitable application techniques. Another option however, is to favour the escape of gas from the coating composition on the substrate before the coating has fully developed. The addition of degassing compounds to the coating composition is a method to favour this escape. A degassing compound is in general an additive but it is also referred to as "anti-popping agent" or "air release agent".

However besides the positive effects of degassing compounds also negative effects can, and in most cases will, occur. It is very often observed that a coating composition containing degassing compounds will result in a yellowish or brownish coloured coating. This discoloration due to the presence of a degassing compound is very unfavourable because it can limit the use of the coating composition. In case the discoloration appears always in the same amount it is possible to counteract this effect by the addition of suitable pigments. However the discoloration is in most cases not reproducible, it can vary due to variations in the coating process. Therefor in many cases colour stabilizers (for example phenols and/or phosphites) have to be added, which will increase the price of the coating composition. Clear coatings or lightly coloured coatings can be difficult to obtain, if at all.

WO 99/63014 discloses a coating composition with a curable film forming resinous material and a degassing compound according to the following structure: 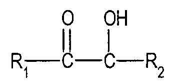 wherein R₁ and R₂ are the same or different and are a primary alkyl group with 1 to 6 carbon atoms or an aromatic group containing one or more heteroatoms.

However there is a need to improve the performance of these compounds in certain respects. Especially the amount of yellowing that occurs after curing of the coating is disadvantageous as is the balance between the yellowing value and the degassing properties.

The purpose of the invention is to overcome these disadvantages and to improve the properties in relation to the yellowing and the degassing.

This is reached by incorporating in the coating composition an effective amount of one or more degassing compounds according to structure I, II, III, IV and/or V and/or dimer derivatives thereof: 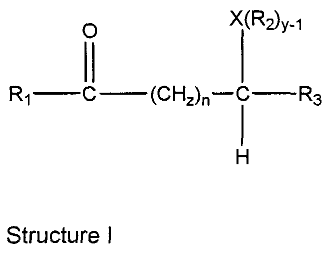 wherein:
R₁, R₂ and R₃ are the same or different and may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms,
n is an integer from 0 to 5,
z is an integer from 0 to 2,
X is a hetero atom chosen from B, N, O, Si, P, S or Se, with the proviso that when X = O, R₂ is not hydrogen,
y = valency of the hetero atom X;
or 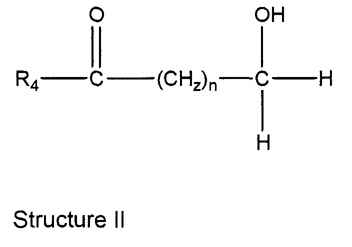 wherein:
R₄ may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms, and
z is an integer from 0 to 2,
n is an integer from 0 to 5;
or 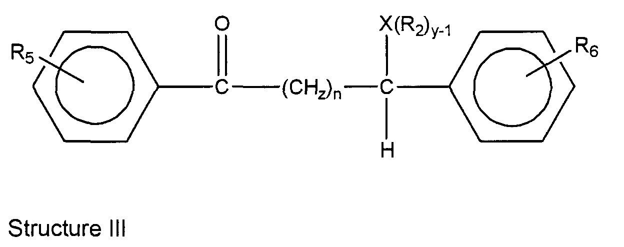 wherein:
R₂ may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms,
R₅ and R₆ may be the same or different and may be hydrogen, a substituted or unsubstituted alkyl group with 1-20 carbon atoms or a substituted or unsubstituted aryl group with 1-20 carbon atoms, with the proviso that when n=0, X=O and R₂ is hydrogen, R₅ and R₆ are not at the same time hydrogen,
z is an integer from 0 to 2,
n is an integer from 0 to 5,
X is a hetero atom chosen from B, N, O, Si, P, S or Se,
y = valency of the hetero atom X;
or 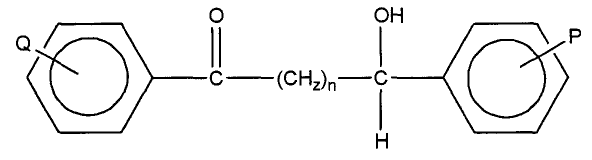 wherein:
P and Q are the same or different and are hydrogen or ortho-, para-directing substituent groups, with the proviso that when n=0, P and Q are not hydrogen at the same time,
z is an integer from 0 to 2,
n is an integer from 0 to 5;
or 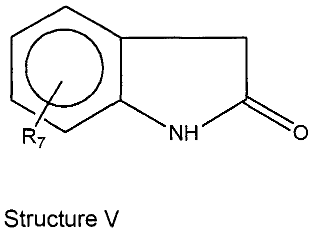 wherein:
R₇ is hydrogen, a substituted or unsubstituted alkyl group with 1-20 carbon atoms and optionally one or more hetero atoms, or a substituted or unsubstituted aryl group with 1-20 carbon atoms and optionally one or more hetero atoms.

With hetero atom is here and hereinafter meant an atom other than carbon or hydrogen, for example an atom chosen from group 4a, 5a, 6a, or 7a of the Periodic Table of the Elements as represented on the inside cover page of the Handbook of Chemistry and Physics, 65^{th} Ed.

It is possible to use more than one degassing compound. When more than one degassing compound is used it is possible to choose degassing compounds that have structures that fall within the same structural formula (either I, II, III, IV or V) or to choose the degassing compounds with structures that fall within the different structural formulas, thus for example a combination of compounds of structure I and II.

In the degassing compounds according to structure I in the coating composition according to the invention (hereafter referred to as the degassing compounds according to the invention), some distance can exist between the carbon atom bearing the carbonyl oxygen and the carbon atom bearing the "-X(R₂)_{y-1} group". Best results are obtained when the distance is not too long. Therefore the number of carbon atoms in between (n) is chosen between 0 and 5. Preferably the number of atoms (n) is at most 2. More preferred is n=0.

The character of the group between the carbon atom bearing the carbonyl oxygen and the carbon atom bearing the "-X(R₂)_{y-1} group" in the degassing compounds according to structure I, can be either saturated or unsaturated. The number of hydrogen atoms in this group depends on its character. When the group is saturated, 2 hydrogen atoms per carbon atom are present. When the group is unsaturated, 0 or 1 hydrogen atom is present per carbon atom.

The degassing compounds according to structure I have a hetero atom in the "-X(R₂)_{y-1} group" which is chosen from B, N, O, Si, P, S or Se, with the proviso that when X = O, R₂ is not hydrogen. Preferably X is chosen from N, O, P, or S. More preferred is X an oxygen atom because the best degassing results are then obtained.

The degassing compounds according to structure I comprise in addition to the hetero atom in the "-X(R₂)_{y-1} group" preferably at least one hetero atom in R₁ and/or R₂ and/or R₃. With more preference at least two additional hetero atoms are present.

In the degassing compounds according to structure II, some distance can exist between the carbon atom bearing the carbonyl oxygen and the carbon atom bearing the -OH group. Best results are obtained when the distance is not too long. Therefore the number of carbon atoms in between (n) is chosen between 0 and 5. Preferably the number of atoms (n) is at most 2. More preferred is n=0.

The character of the group between the carbon atom bearing the carbonyl oxygen and the carbon atom bearing the -OH group in the degassing compounds according to structure II, can be either saturated or unsaturated. The number of hydrogen atoms in this group depends on its character. When the group is saturated, 2 hydrogen atoms per carbon atom are present. When the group is unsaturated, 0 or 1 hydrogen atom is present per carbon atom.

An examples of a compound according to structure II is α-hydroxy-acetophenone.

The degassing compounds according to structure II preferably comprise at least one hetero atom in R₄. More preferably the hetero atom in R₄ is chlorine.

R₅ and R₆ in structure III are preferably hydrogen or a substituted or unsubstituted alkyl group with 1-20 carbon atoms, with the proviso that when n=0, X=O and R₂ is hydrogen, R₅ and R₆ are not at the same time hydrogen. More preferably R₅ and/or R₆ are an alkyl group with 2-12 carbon atoms. Even more preferred R₅ and/or R₆ are an alkyl group with 3-8 carbon atoms. Most preferred R₅ or R₆ is a tertiary butyl group.

R₂ in structure III may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms.

In the degassing compounds according to structure III, some distance can exist between the carbon atom bearing the carbonyl oxygen and the carbon atom bearing the "-X(R₂)_{y-1} group. Best results are obtained when the distance is not too long. Therefore the number of carbon atoms in between (n) is chosen between 0 and 5. Preferably the number of atoms (n) is at most 2. More preferred is n=0.

The character of the group between the carbon atom bearing the carbonyl oxygen and the carbon atom bearing the "-X(R₂)_{y-1} group" in the degassing compounds according to structure III, can be either saturated or unsaturated. The number of hydrogen atoms in this group depends on its character. When the group is saturated, 2 hydrogen atoms per carbon atom are present. When the group is unsaturated, 0 or 1 hydrogen atom is present per carbon atom.

The degassing compounds according to structure III have a hetero atom in the "-X(R₂)_{y-1} group" which is chosen from B, N, O, Si, P, S or Se. Preferably X is chosen from N, O, P, or S. More preferred is X an oxygen atom because the best degassing results are then obtained.

The position of R₅ and/or R₆ on the ring influences the reactivity. Therefore it is preferred to have R₅ and/or R₆ on the ortho or para position relative to the position of the chain comprising the carbonyl group. More preferred is it to have a tertiary butyl group as R₅ or R₆ in the para position. The most preferred degassing compounds are 4'-(tert.butyl)-benzoin and 4-(tert.butyl)-benzoin.

P and Q in structure IV are the same or different and are hydrogen or ortho-, para-directing substituent groups in electrophilic aromatic substitution reactions with the proviso that when n=0, P and Q are not hydrogen at the same time. The concept of "ortho-, para-directing substituent groups" is well-known to the man skilled in the art, reference can for example be made to "Organic Chemistry" by R.T. Morrison and R.N. Boyd, 4^{th} Ed., Allyn and Bacon Inc., pages 614-619. Examples of ortho-, para-directing substituent groups are -NH₂, -OH, -OCH₃, -NHCOCH₃, -C₆H₅, -CH₃ and halogen atoms.

In the degassing compounds according to structure IV, some distance can exist between the carbon atom bearing the carbonyl oxygen and the carbon atom bearing the -OH group. Best results are obtained when the distance is not too long. Therefore the number of carbon atoms in between (n) is chosen between 0 and 5. Preferably the number of atoms (n) is at most 2. More preferred is n=0.

The character of the group between the carbon atom bearing the carbonyl oxygen and the carbon atom bearing the -OH group in the degassing compounds according to structure IV, can be either saturated or unsaturated. The number of hydrogen atoms in this group depends on its character. When the group is saturated, 2 hydrogen atoms per carbon atom are present. When the group is unsaturated, 0 or 1 hydrogen atom is present per carbon atom.

Examples of compounds according to structure IV are: 4'-chlorobenzoin, 4,4'-dichloro-benzoin, 2,2'-dichloro-benzoin, 4'-methoxy-benzoin, 2'-methoxy-benzoin, 2,2'-methoxy-benzoin, 4'-(tert. butyl)-benzoin, 4,4'-(tert.butyl)-benzoin. Preferably the ortho-, para-directing substituent groups are -OCH₃ or -Cl, resulting in for example 4'-chloro-benzoin. Preferably the ortho-, para-directing substituent groups are at the ortho-position of the aromatic ring, for example 2,2'-dichloro-benzoin, 2,2'-di-methoxy-benzoin.

R₇ in structure V is hydrogen, a substituted or unsubstituted alkyl group with 1-20 carbon atoms and optionally one or more hetero atoms, or a substituted or unsubstituted aryl group with 1-20 carbon atoms and optionally one or more hetero atoms. Preferably R₇ is hydrogen or a substituted or unsubstituted alkyl group with 1-20 carbon atoms. More preferred R₇ is hydrogen thus forming the compound oxindole.

The degassing compounds according to the invention can have molecular weights within a wide range, depending on the meaning of the various groups. The molecular weight should generally be higher than 90 g/mol. Preferably however the molecular weight is equal to or less than 1000 g/mol, more preferred is a molecular weight of at most 500 g/mol. Most preferred is a molecular weight equal to or less than 200 g/mol. It has been found that the lower the molecular weight is, the better the degassing properties are.

The effective amount of degassing compound that is most suitable for a specific coating composition can vary within a wide range. This amount can easily be determined by simple experimentation by the man skilled in the art. He can for example apply coating composition comprising a degassing agent, onto a substrate with a layer of increasing thickness, for example starting at a layer thickness of 50 µm until 200 µm. He can than easily observe at what layer thickness entrapped gas bubbles occur after curing. In case the layer thickness without bubbles is not high enough, the man skilled in the art can increase the amount of degassing agent.

The function of the degassing compound is to enhance the shrinkage of entrapped gas bubbles in the applied coating composition. As the amount of entrapped gas bubbles tends to increase with an increasing layer thickness, it is often advantageous to use a higher concentration of degassing agent when thicker layers are envisaged. It is true however that an upper limit in layer thickness exists where above it is impossible to remove entrapped gas bubbles. It is generally accepted that the degassing agent should be able to prevent bubbles in a coating layer of at least 30 µm. A generally accepted upper limit is 120 µm. Preferably the degassing agent performs well in layers with a thickness of between 50-90 µm.

From the above it is clear that depending on the exact conditions the effective amount of degassing agent should be adjusted. Suitable ranges can, for example, be between 0.001 and 5 weight percentage (w%). Preferably use is made of an amount between 0.001 and at most 2 w%, because this is most cost effective and the best results are obtained in view of yellowing. The amount of degassing compound is measured relative to the amount of binder. With binder is meant the sum of resin and crosslinker or when more resins and/or crosslinkers are present: the sum of resins and crosslinkers.

Some of the degassing compounds according to the invention are liquid and some will be solid. The man skilled in the art knows how to handle this kind of compounds. It is for example possible to incorporate a liquid degassing compound in or on a carrier, making handling easier.

The resins that can be used in the coating composition according to the invention can be chosen from a wide group. The choice of resin will mostly be dictated by the drying mechanism of the coating composition into the final coating. The generally recognised mechanisms are physically drying, room temperature curing, stoving and radiation curing.

The physically drying coating compositions form a film un-aided, by evaporation of the solvents. In case the technological properties of the coating after physical drying would not be satisfactory, the resins have to be modified by chemical reactions, either on their own or with other components of the coating composition.

A distinction is made between room-temperature curing coating compositions and thermal curing coating compositions, depending on the temperature at which these curing reactions occur. Thermal curing coating compositions are sometimes manufactured as one-component coating compositions, however more often multi component coating compositions are used. Examples of resins that can be used in this segment are for example, OH-group containing polymers crosslinked with phenolic resins, melamine- or urea-formaldehyde resins or blocked isocyanates. The curing reactions can be accelerated by catalysts. The catalysts can be used in a blocked form to prevent them from becoming active too early.

Radiation curing is the kind of curing that takes place under the influence of radiation. Examples of suitable radiation are ultraviolet light (UV), electronbeam (EB), infrared (IR) radiation or near-infrared (NIR) radiation. The compounds according to the invention can advantageously be used in a coating composition that can be cured by UV-radiation.

The atmosphere around the coated substrate during drying, curing or stoving, will generally be ambient air (approximately 80% nitrogen and 20% oxygen). Preferably the atmosphere is enriched in oxygen, for example 50% nitrogen and 50% oxygen. Most preferably the atmosphere consists of pure oxygen. It has been found that in the case that relatively more oxygen is present, the entrapped gas bubbles tend to shrink faster and therefore, with the same layer thickness of the applied coating composition, less gas bubbles stay entrapped in the cured coating, thus resulting in an improved appearance of the coating.

Depending on the kind of resin used it can be necessary (to obtain a coating that performs well) to incorporate a crosslinker into the coating composition. The crosslinker can be a separate compound or it can be present within the structure of the resin itself, so-called self-crosslinking resins. However it has been found that a separate crosslinker is preferred.

The coating compositions according to the invention can be of the solvent-borne type or of the powder coating type. With solvent -borne is referred to the fact that a liquid or a blend of liquids is used to dissolve the resin(s). The solvent in the coating composition can be water or a suitable organic solvent or a mixture of any of them. Preferably the degassing compound according to the invention is used in a powder coating.

In powder coating compositions both thermoplastic and thermosetting coating compositions are used. Suitable resins for use in the thermoplastic coating composition are for example: polyethylene, polyamide, polyester, ethylene-vinyl alcohol copolymer, polyvinyl chloride and polyvinylidene fluoride. Suitable resins for use in the thermoset coating composition are for example: epoxy resin, acid functional polyester, hydroxy functional polyester, hydroxy functional acrylate resin and glycidyl acrylate resin. The crosslinkers that are suitable for use in the thermoset coating composition are for example phenolic crosslinkers, imidazoline crosslinkers, anhydride adducts, modified dicyandiamine, epoxy resin, glycidyl crosslinker, for example TGIC (triglycidyl isocyanurate), hydroxylalkyl amide, isocyanate adducts, dodecanedicarboxylic acid. The man skilled in the art can easily determine what the best crosslinker is for the resin in use. Preferably epoxy units containing crosslinkers, for example bisphenol-A epoxy resin, are used.

The resin: crosslinker weight ratio can be adjusted as necessary depending on the final use of the powder paint binder composition. It is also possible to use a mixture of resins. The ratio between functional resin groups: functional crosslinker groups can range, for example, between about 1:0.5 and 1:1.5.

Preferably use is made in the powder coating compositon of a resin containing endomethylene tetrahydrophtalic acid units.

The resin containing endomethylene tetrahydrophtalic acid units (HIMIC- units) generally contains at least 10 wt% HIMIC and less than 100 wt% (relative to the monomers), and preferably between about 35 and about 80 wt%. The HIMIC-units in the resin can act as functional acid end groups that can react with the crosslinkers.

The acid or hydroxyl functional resin containing endomethylene tetrahydrophthalic acid units is preferably obtained by first preparing an unsaturated resin which is subsequently reacted with cyclopentadiene (CPD) at a temperature between about 160°C to about 220°C.

Preferably the resin prepared in the first step is an unsaturated polyester. This unsaturated polyester is generally formulated from one or more aliphatic and/or cycloaliphatic mono-, di- and/or polyvalent alcohols and one or more aliphatic, cycloaliphatic and/or aromatic di- or polyvalent carboxylic acids and/or esters derived therefrom. If desired also monocarboxylic acids can be applied.

Examples of suitable alcohols include benzyl alcohol, ethylene glycol, propylene glycol, neopentyl glycol, butane diol, hexane diol, dimethylol cyclohexane, diethylene glycol, glycerol, trimethylol-propane, pentaerythritol, dipentaerythritol, hydrated bisphenol-A, 2,2-bis-(2-hydroxyethoxy)phenylpropane and/or 2,2-bis-2-hydroxypropoxy phenylpropane. Instead of or in addition to the alcohol compound(s) one or more epoxy compounds, for example ethylene oxide, propylene oxide and/or allylglycidyl ether or dicyclopentadiene can be used.

Examples of suitable di- or polyvalent carboxylic acids include maleic acid, fumaric acid, itaconic acid, citraconic acid, malonic acid, succinic acid, glutaric acid, adipic acid, sebacic acid, 1,4-cyclohexane dicarboxylic acid, hexahydrophthalic acid, hexachloroendomethylene tetrahydrophthalic acid, dichlorophthalic acid, isophthalic acid, terephthalic acid and/or trimellitic acid or esters thereof. The carboxylic acid can also be used in the form of an anhydride, for example tetrahydrophthalic anhydride, endomethylene tetrahydrophthalic anhydride, hexahydrophthalic anhydride, maleic anhydride or phthalic anhydride.

Optionally, saturated or unsaturated monocarboxylic acids, for example synthetic and/or natural fatty acids with 2 to 36 carbon atoms or esters prepared from these carboxylic acids and polyvalent alcohols for example glycerol can also be used. Examples of suitable monocarboxylic acids are lauric acid, stearic acid, oleic acid, linolic acid, benzoic acid, acrylic acid and/or methacrylic acid.

According to a preferred embodiment of the invention the unsaturated polymer from the first step is an unsaturated polyester containing fumaric acid, maleic acid (anhydride) and/or terephthalic acid as acid units.

The alcohol component of the unsaturated polyester is preferably ethylene glycol, propylene glycol and/or neopentyl glycol.

The unsaturated polyester may be both crystalline and amorphous. The amount of double bonds in the unsaturated polyester is usually between about 120 and about 2000 grams per unsaturated group and preferably between about 125 and about 1500.

The molecular weight Mn (number average molecular weigth) of the unsaturated polyester is usually between about 500 and about 6000, preferably between about 1000 and about 4500.

Acid functional polyesters usually have an acid number between about 25 mg KOH/gram resin and about 145 mg KOH/gram resin, preferably an acid number between about 30 mg KOH/gram resin and about 120 mg KOH/gram resin.

Hydroxyl-functional polyesters usually have a hydroxyl number between about 25 mg KOH/gram resin and about 145 mg KOH/gram resin, preferably a hydroxyl number between about 30 mg KOH/gram resin and about 120 mg KOH/gram resin.

The functionality is generally between about 1.5 and about 4 and is preferably between 1.9 and 3.5.

The polymerization reaction in the preparation of the unsaturated polyester generally takes place in the presence of catalysts and inhibitors. Suitable catalysts include for example tetrabutyl titanate and dibutyl tin oxide. Suitable inhibitors include for example butyl alcohol and t-butyl-hydroquinone. In the formation of the unsaturated polyester catalysts and inhibitors are generally used in amounts between about 0.005 and about 1 wt.% relative to the monomers.

The preparation of the unsaturated polyester can take place via a one-step process or via a multistep process. If the unsaturated polyester preparation takes place via a one-step process, glycols, acids, catalysts and optionally inhibitors can be esterified to the desired acid number or hydroxyl number at a temperature lower than 220°C. To remove low-molecular material or to obtain the desired acid number or hydroxyl number, optionally a vacuum can be applied at reduced temperature.

If the unsaturated polyester preparation takes place in two steps, in the first step saturated acids, glycols, catalysts and inhibitors can be esterified at temperatures between, for example, about 210°C to about 260°C during for a period of about 2-10 hours, and in the second step the unsaturated compounds, acids and glycols can be esterified at temperatures between, for example, about 180°C to about 220°C for a period of about 5-16 hours. The monomers and the reaction conditions can be varied depending on the desired properties.

After the unsaturated polyester has been obtained dicyclopentadiene (DCPD) is added to the unsaturated polyester at temperatures between about 160°C and about 220°C resulting in a retro Diels-Alder reaction forming CPD. Next the cyclopentadiene (CPD) and the fumaric acid or maleic acid groups in the unsaturated polyester react by forming HIMIC-units. The amount of DCPD added is generally between 2 and 40 wt.% relative to the total weight of the monomers. The functional acid or hydroxyl groups do not react during this reaction and can at a later stage, in the presence of a suitable crosslinker, cure to yield a powder coating.

The resin that contains HIMIC units contains virtually no linear alkyl chains with more than 5 carbon atoms.

Powder coating compositions in general can comprise in addition to the resin and optional crosslinker, various components, for example degassing compounds, color stabilizers, flow control agents, pigments, fillers and additives.

Suitable pigments include without limitation inorganic pigments, for example titanium dioxide, zinc sulphide, iron oxide and chromium oxide, as well as organic pigments, for example azo compounds. Suitable fillers include, for example, metal oxides, silicates, carbonates and sulphates.

Suitable flow agents include for example, polyalkyl acrylates, fluorohydrocarbons and silicon oils. Other suitable additives include, for example, additives for improvement of the tribo-electric charging properties, for example sterically hindered tertiary amines, which are described in EP-B-371528.

Compositions according to the present invention can be used in powder coatings intended for use on metal, wood, paper and plastic substrates. The preferred substrate is metal. Examples are general-purpose top coats for use in industry, equipment coatings and for example for cans, domestic and other small equipment. The coatings are also highly suitable in the automotive industry for coating of external and/or internal parts.

The invention also relates to entirely or partly coated substrates comprising a substrate and a coating in which the coating is derived from the coating composition according to the invention. These coated substrates have very desirable properties in that they have a good appearance free from surface defects (pinholes, cratering) and a very low yellowness-level. In addition to this the coating adheres very well to the substrate.

The invention also relates to the use of a compound according to structure I, II, III, IV and/or V depicted above, as a degassing compound in a coating composition. Preferably the degassing compound according to the invention is used in a powder coating composition.

The invention is further demonstrated with reference to the following non-limiting examples. The compositions of the powder coating formulations are shown in Table 1.

**Table I**

| Composition and test results | Comparative Example A | Comparative Example B | Example 1 |
|---|---|---|---|
| Polyester resin ^{a)} | 100 | 100 | 100 |
| Epoxy resin ^{b)} | 100 | 100 | 100 |
| Pigment (TiO2) ^{c)} | 100 | 100 | 100 |
| Catalyst ^{d)} | 0.4 | 0.4 | 0.4 |
| Flow agent ^{e)} | 3 | 3 | 3 |
| α-hydroxy acetophenone | - | - | 0.1 |
| Benzoin | - | 0.6 | - |
| b* | 0.8 | 2.3 | 1.1 |
| Degassing level (µm) | 70 | 174 | 159 |

| | | | |
|---|---|---|---|
| ^{a)} This is an acid functionalised Uralac® polyester resin with acidity number of 82, based on HiMiC-units (DSM Resins B.V. the Netherlands) | | | |
| ^{b)} The epoxy resin is of the type Araldite® GT 7004 WPE= 725 (® Ciba-Geigy Corp.) | | | |
| ^{c)} The pigment is of the type Kronos®2310. | | | |
| ^{d)} The catalyst is triphenyl methyl phosphonium bromid (TRAP). | | | |
| ^{e)} The flow agent is Resiflow®-PV5 (Worleé) | | | |

All components were first blended in a BRAUN mixer (MX-40). The mixtures were then extruded through a PRISM TCE 16 PC. The extruded material was then grounded and classified to a particle size lower than 90 µm. The finished powders were electrostatically sprayed onto test panels (Q-Panel S-46). The coated panels were cured for 10 minutes at 200°C in a hot air oven (Hereaus UT 6120). The color is measured is using the standard DIN 61 74. The measurements are conducted at layer thickness of 60 µm by means of Dr Lange apparatus type LMG140 equipped with a measuring head with a diameter of 2 cm. The degassing level is determined by measuring the layer thickness, using a Fischer equipment type D211D, at which the first signs of pin holing is observed.

It can be seen from the above results that the absence of a degassing compound (Comparative Example A) results in a low b*-value (which is indicative for the amount of discoloration), however the degassing level is unacceptably low. The addition of benzoin as a degassing compound (Comparative Example B) results in an increase in the degassing level, however the b*-value becomes unacceptably high. The addition of α-hydroxy-acetophenon (which is a degassing compound according to the invention, structure II) results in an increased degassing level while only slightly enhancing the b*-value.

## Claims

1. Coating composition comprising one or more resins and optionally one or more crosslinkers and an effective amount of one or more degassing compounds according to structure I, II, III, IV or V and/or dimer derivatives thereof 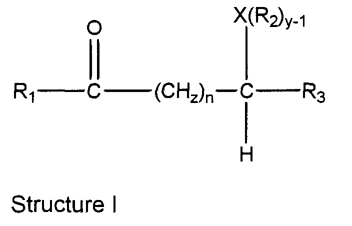 wherein:
R₁, R₂ and R₃ are the same or different and may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms,
n is an integer from 0 to 5,
z is an integer from 0 to 2,
X is a hetero atom chosen from B, N, O, Si, P, S or Se, with the proviso that when X = O, R₂ is not hydrogen and
y = valency of the hetero atom X
or 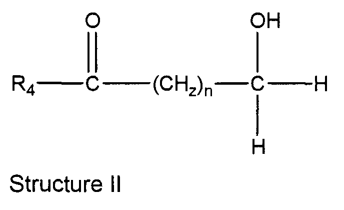 wherein:
R₄ may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms, and
z is an integer from 0 to 2,
n is an integer from 0 to 5;
or 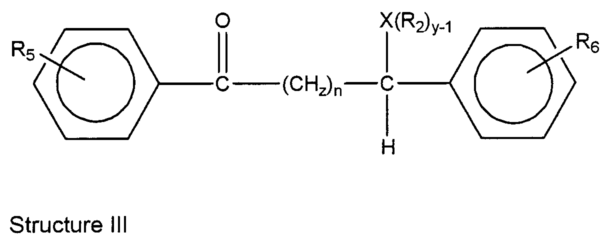 wherein:
R₂ may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms,
R₅ and R₆ may be the same or different and may be hydrogen, a substituted or unsubstituted alkyl group with 1-20 carbon atoms or a substituted or unsubstituted aryl group with 1-20 carbon atoms, with the proviso that when n=0, X=O and R₂ is hydrogen, R₅ and R₆ are not at the same time hydrogen,
z is an integer from 0 to 2,
n is an integer from 0 to 5,
X is a hetero atom chosen from B, N, O, Si, P, S or Se,
y = valency of the hetero atom X;
or 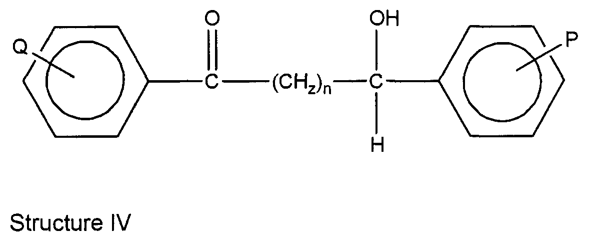 wherein:
P and Q are the same or different and are hydrogen or ortho-, para-directing substituent groups, with the proviso that when n=0, P and Q are not hydrogen at the same time,
z is an integer from 0 to 2,
n is an integer from 0 to 5;
or 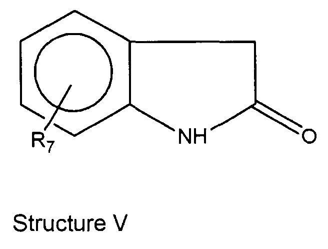 wherein:
R₇ is hydrogen, a substituted or unsubstituted alkyl group with 1-20 carbon atoms and optionally one or more hetero atoms, or a substituted or unsubstituted aryl group with 1-20 carbon atoms and optionally one or more hetero atoms and/or dimer derivatives thereof

2. Coating composition according to claim 1 **characterised in that** n=0 in structure I, II, III or IV.

3. Coating composition according to any one of claim 1-2 **characterised in that** X=O in structure I or III.

4. Coating composition according to any one of claim 1-3 **characterised in that** the molecular weight of the degassing compound is equal to or less than 200 g/mol.

5. Coating composition according to any one of claim 1-4 **characterised in that** the degassing compound is present in an amount of at least 0,001 and at most 2 w% relative to the binder.

6. Coating composition according to any one of claim 1-5 **characterised in that** at least one separate crosslinker is present.

7. Coating composition according to any one of claim 1-6 **characterised in that** the coating composition can be cured by UV- radiation.

8. Entirely or partly coated substrate comprising a substrate and a coating in which the coating is derived from the coating composition according to any one of claim 1-7.

9. Use of a compound according to structure I, II, III, IV or V as a degassing compound in a coating composition. 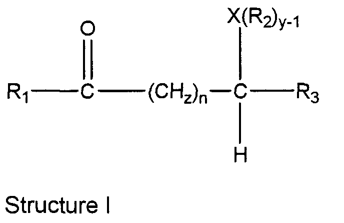 wherein:
R₁, R₂ and R₃ are the same or different and may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms,
n is an integer from 0 to 5,
z is an integer from 0 to 2,
X is a hetero atom chosen from B, N, O, Si, P, S or Se, with the proviso that when X = O, R₂ is not hydrogen and
y = valency of the hetero atom X;
or 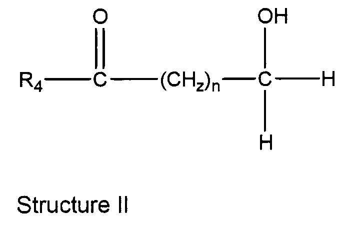 wherein:
R₄ may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms, and
z is an integer from 0 to 2,
n is an integer from 0 to 5;
or 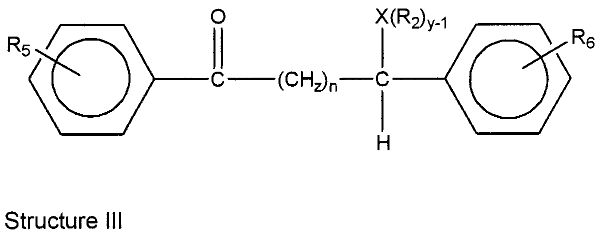 wherein:
R₂ may be hydrogen, a substituted or unsubstituted alkyl group with 1-20 carbon atoms and optionally one or more hetero atoms, or a substituted or unsubstituted aryl group with 1-20 carbon atoms and optionally one or more hetero atoms,
R₅ and R₆ may be the same or different and may be hydrogen, a substituted or unsubstituted alkyl group with 1-20 carbon atoms or a substituted or unsubstituted aryl group with 1-20 carbon atoms, with the proviso that when n=0, X=O and R₂ is hydrogen, R₅ and R₆ are not at the same time hydrogen,
z is an integer from 0 to 2,
n is an integer from 0 to 5,
X is a hetero atom chosen from B, N, O, Si, P, S or Se,
y = valency of the hetero atom X;
or 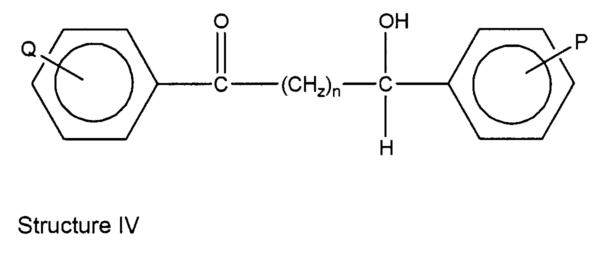 wherein:
P and Q are the same or different and are hydrogen or ortho-, para-directing substituent groups, with the proviso that when n=0, P and Q are not hydrogen at the same time,
z is an integer from 0 to 2,
n is an integer from 0 to 5;
or 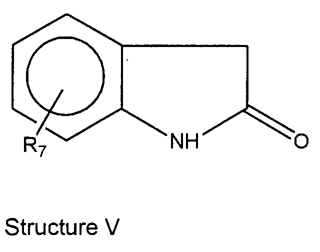 wherein:
R₇ is hydrogen, a substituted or unsubstituted alkyl group with 1-20 carbon atoms and optionally one or more hetero atoms, or a substituted or unsubstituted aryl group with 1-20 carbon atoms and optionally one or more hetero atoms.

10. Use of a compound according to claim 9 in a powder coating composition
